# EUROPEAN PATENT APPLICATION

(11) **EP 1 914 593 A1**
(43) Date of publication of application: **23.04.2008**
(21) Application number: 06782502.6
(22) Date of filing: 08.08.2006
(51) Int. Cl.: G03B 21/00

(54) **AUXILIARY APPARATUS FOR PROJECTION APPARATUS, AND PROJECTION SYSTEM**

(30) Priority: 11.08.2005 JP 2005233351
(71) Applicant: NIKON CORPORATION, Tokyo 100-8331 (JP)
(72) Inventor: FUJINAWA, Nobuhiro, Tokyo 100-8331 (JP); NOZAKI, Hirotake, Tokyo 100-8331 (JP); OHMURA, Akira, Tokyo 100-8331 (JP)
(74) Representative: Walaski, Jan Filip
(86) International application number: PCT/JP2006/315676
(87) International publication number: WO 2007/018217

(57) **Abstract**

An auxiliary apparatus for a projection apparatus used in association with a projection apparatus for projecting an optical image, includes: a communication device that performs communication with the projection apparatus; and a projection auxiliary control device that, when communication is performed with the projection apparatus through the communication device, expands a projection function of the projection apparatus broader than when the optical image is projected without the communication.

## Description

### TECHNICAL FIELD

The present invention relates to an auxiliary apparatus for use in a projection apparatus that projects an optical image and to a projection system.

### BACKGROUND ART

Small size electronic equipment having a projection function is known (see Patent Document 1). With the projector-attached mobile phone disclosed in the Patent Document 1, an user can have information projected on a palm of his or her own or on a wall while he or she is calling.

Patent Document 1: Japanese Laid-Open Patent Publication No. 2000-236375

### DISCLOSURE OF THE INVENTION

### Problems to be Solved by the Invention

The Patent Document 1 discloses nothing about a technology to expand projection function.

### Means for Solving the Problems

An auxiliary apparatus for a projection apparatus used in association with a projection apparatus for projecting an optical image according to a first aspect of the present invention, includes: a communication device that performs communication with the projection apparatus; and a projection auxiliary control device that, when communication is performed with the projection apparatus through the communication device, expands a projection function of the projection apparatus broader than when the optical image is projected without the communication.
In the auxiliary apparatus for a projection apparatus according to the first aspect, it is preferable to further include a voice reproducing device, and that the projection auxiliary control device controls the voice reproducing device to reproduce a voice signal acquired from the projection apparatus by the communication. A data reading out device may be further provided, and the projection auxiliary control device may control the data reading out device and the communication device to transmit image data read out from a recording medium in response to a request signal acquired from the projection apparatus by the communication to the projection apparatus. An operation member may further be provided, and the projection auxiliary control device may control the communication device to transmit a focus adjustment instructing signal to the projection apparatus in response to an operation signal output from the operation member. A power supply device may be further included, and the projection auxiliary control device may control the power supply device to supply power to the projection apparatus. The projection auxiliary control device may control the communication device to transmit a control signal to increase projection luminance to the projection apparatus.
A projection system according to a second aspect of the present invention includes: a projection apparatus; and an auxiliary apparatus for the projection apparatus used in association with the projection apparatus, wherein: the projection apparatus comprises a projection section that projects an optical image, a first communication device that performs communication with the auxiliary apparatus for the projection apparatus, and a projection control device that, when communication is performed with the auxiliary apparatus for the projection apparatus through the first communication device, expands a projection function of the projection section broader than when the optical image is projected without the communication, and the auxiliary apparatus for the projection apparatus comprises a second communication device that performs communication with the projection apparatus, and a projection auxiliary control device that, when communication is performed with the projection apparatus through the second communication device, expands a projection function of the projection section broader than when the optical image is projected without the communication.
In the projection system according to the second aspect, it is preferable that the projection control device controls the projection section to increase projection luminance in response to a control signal acquired from the auxiliary apparatus for the projection apparatus by the communication. It is preferable that, when a reproduction image according to image data acquired from the auxiliary apparatus for the projection apparatus is to be projected by the projection section, the projection control device controls the first communication device to transmit a request signal to the auxiliary apparatus for the projection apparatus, and controls the projection section to project a reproduction image according to the image data transmitted from the auxiliary apparatus for the projection apparatus in response to the request signal and received by the first communication device. When communication is performed with the auxiliary apparatus for the projection apparatus, the projection control device may control the first communication device to transmit a voice signal to the auxiliary apparatus for the projection apparatus.
According to a third aspect of the present invention, in a projection assisting method for assisting a projection operation of a projection apparatus that projects an optical image by using an auxiliary apparatus for a projection apparatus in association with the projection apparatus, communication between the projection apparatus and the auxiliary apparatus for the projection apparatus is performed; and a projection function of the projection apparatus is expanded when the communication is performed between the projection apparatus and the auxiliary apparatus for the projection apparatus broader than when the optical image is projected without performing the communication.

### Advantageous Effect of the Invention

According to the present invention, the function of the projection apparatus can be expanded.

### BRIEF DESCRIPTION OF THE DRAWINGS

FIGS. 1(a), 1(b), and 1(c) are a left side view, a plan view, and a front view, respectively, showing a small size projector according to an embodiment of the present invention;
FIG. 2(a) is a diagram showing a projection section rotated to a relative angle of θ = 90 degrees, FIG. 2(b) is a diagram showing the projection section rotated to a relative angle of θ = 180 degrees, and FIG. 2(c) is a diagram showing the projection section rotated to a relative angle of θ = 270 degrees;
FIG. 3 is a block diagram illustrating the circuitry of the projector and a cradle;
FIG. 4 is a flowchart illustrating the flow of the main processing performed by a CPU of the projector;
FIGs. 5(a), 5(b), and 5(c) are a left side view, a plan view, and a front view, respectively, showing a cradle on which the projector is mounted; and
FIG. 6 is a flowchart illustrating the main processing performed by a CPU of the cradle.

### BEST MODE FOR CARRYING OUT THE INVENTION

Hereinafter, the best mode for carrying out the present invention will be explained with reference to the attached drawings. A projection system of the present invention includes a projector and a cradle. When the projector is mounted on the cradle, the cradle and the projector are connected to each other through an interface to allow communication and power supply therebetween. The interface includes at least a control signal line (Control I/F), a data signal line (Data I/F), and a power source line.

### <Projector>

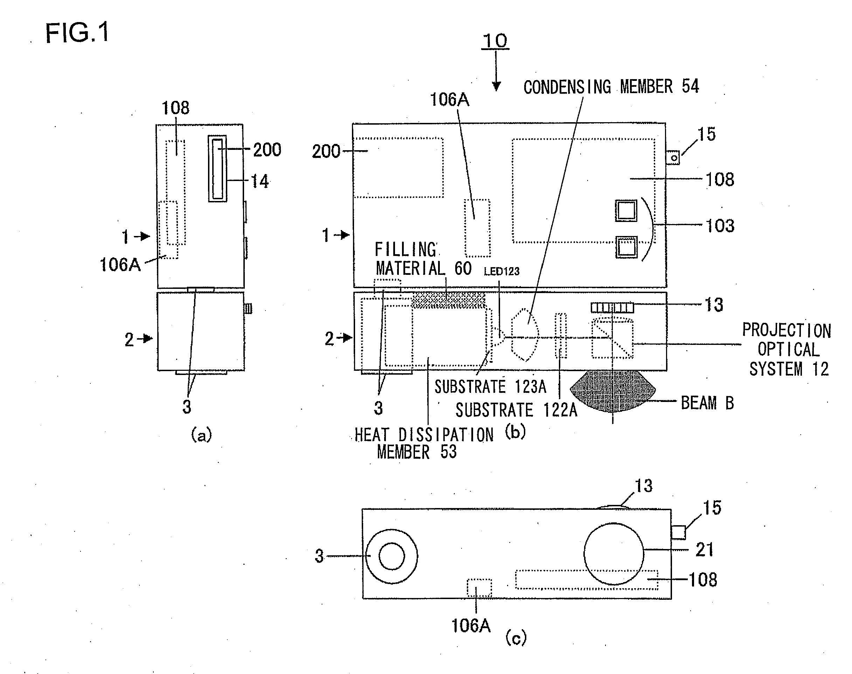

FIGs . 1(a) to 1(c) are three-plane diagrams illustrating a small size projector according to an embodiment of the present invention. FIG. 1(a) is a left side view, Fig. 1(b) is a plan view, and Fig. 1(c) is a front view. The projector 10 includes a control section 1 and a projection section 2, and casings of the control section 1 and the projection section 2 are rotatably supported by a hinge section 3. The hinge section 3 is arranged near an end of the projection section 2 in the longitudinal direction of the projection section 2. The axis of rotation of the hinge section 3 is perpendicular to each of surfaces of the control section 1 and the projection section 2, which face to each other. The hinge section 3 is provided with a click mechanism (not shown). The click mechanism operates in positions at relative angles θ between the control section 1 and the projection section 2 of 90 degrees, 180 degrees, and 270 degrees. Note that the hinge section 3 is configured to be supported at any angles besides the above-mentioned click positions. The control section 1 includes a strap attaching member 15 to which a strap (not shown) or the like can be attached.

On an upper surface of the control section 1 is arranged an operation member 103. The operation member 103, which includes a main switch, an optical source ON/OFF switch, and so on, is operated when the projector 10 is used alone. ON an upper surface of the projection section 2 is arranged a focus adjusting dial 13. The focus adjusting dial 13 is operated upon focus adjustment of a projection optical system detailed hereinbelow.

A projection image is projected through an opening 21 located in the front of the projection section 2. The position at which the opening 21 is arranged is on the side opposite to the hinge section 3 in the longitudinal direction of the projection section 2.

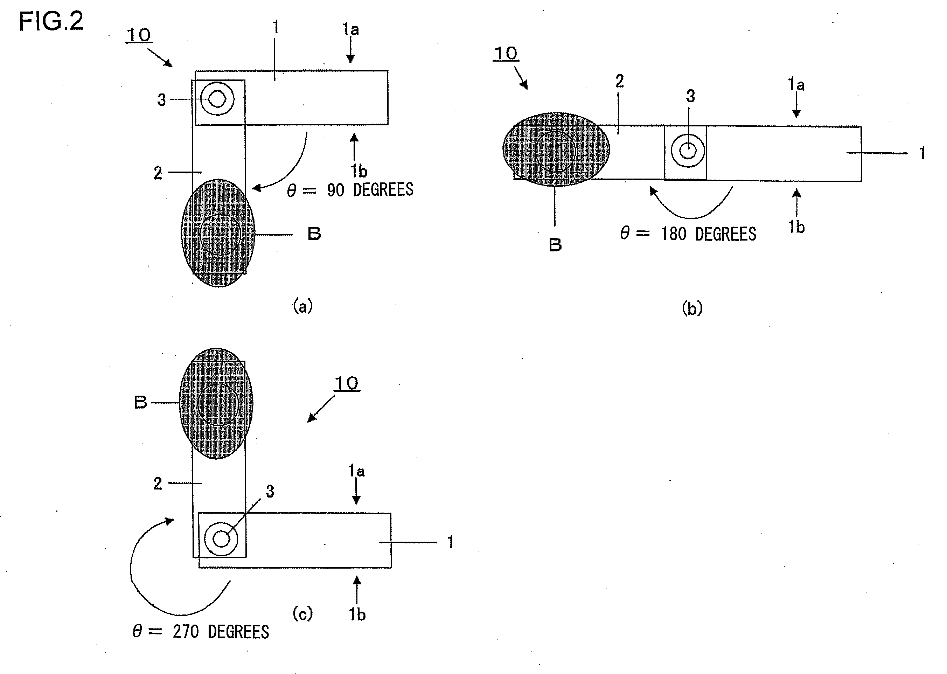

FIGs. 2(a) to 2(c) are diagrams exemplifying three modes of the projector 10 with the hinge section 3 being rotated. FIG. 2(a) is a diagram illustrating rotation of the projection section 2 to a relative angle of θ = 90 degrees around the hinge section 3 serving as an axis of rotation. FIG. 2(b) is a diagram illustrating rotation of the projection section 2 to a relative angle of θ = 180 degrees around the hinge section 3 serving as an axis of rotation. FIG. 2(c) is a diagram illustrating rotation of the projection section 2 to a relative angle of θ = 270 degrees around the hinge section 3 serving as an axis of rotation. In each of FIGs. 2(a) to 2(c), the beam B represents a projection beam emitted from the projection section 2.

If the projector 10 is mounted on a plane, the projector 10 is mounted with an upper surface 1a or a lower surface 1b of the control section 1 down. If the projector 10 is in the mode shown in FIG. 2(a) or Fig. 2(b), the projector 1 is mounted with the surface 1a down. If the projector 10 is in the mode shown in FIG. 2(c), the projector 10 is mounted with the surface 1b down. Since the size of the control section 1 is larger than the size of the projection section 2, the posture of the projector 10 is stable even when the projection section 2 having been rotated is not brought into contact with the mounting plane. Note that when the projector 10 is in the state shown in FIGs. 1(a) to 1(c) in which the relative angle θ between the control section 1 and the projection section 2 is set at 0 (zero) degrees (storage posture), the projection section 10 can be mounted on the plane with either one of the upper surface 1a or the lower surface 1b down. In addition, the projector 10 can perform projection in a storage posture.

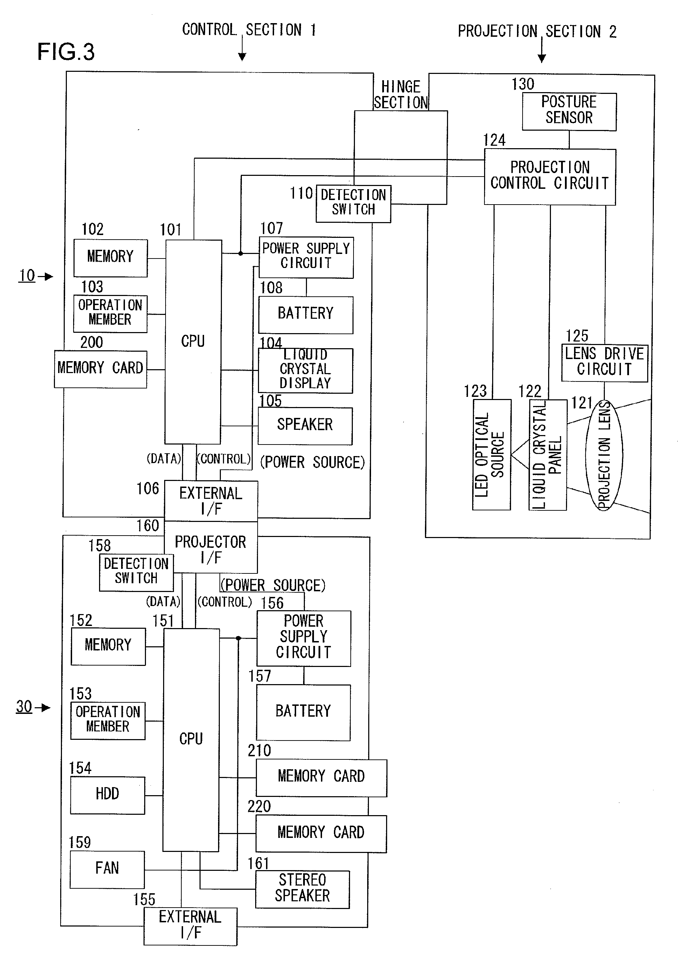

FIG. 3 is a block diagram illustrating the circuitry of the projector 10 and the cradle 30 detailed later. In FIG. 3, the control section 1 of the projector 10 includes a CPU 101, a memory 102, the operation member 103, a liquid crystal display 104, a speaker 105, an external interface (I/F) 106, a power supply circuit 107, and an open and close angle detection switch 110. A battery 108 and a memory card 200 are attached to the control section 1.

The projection section 2 includes a projection lens 121, a liquid crystal panel 122, an LED optical source 123, a projection control circuit 124, a lens drive circuit 125, and a posture sensor 130.

The CPU 101, which is a controller, performs, for example, predetermined calculations using signals input from each section that constitutes the projector 10 based on a control program and sends control signals to each section of the projector 10 to control the projection operation. Note that the control program is stored in a nonvolatile memory (not shown) in the CPU 101. The CPU 101 further performs trapezoidal distortion correction (Keystone compensation) on data of the image to be projected by the projector 10.

The memory 102 is used as a work memory of the CPU 101. The operation member 103 includes to the main switch, optical source on/off switch, and so on and sends operation signals corresponding to respective operation switches to the CPU 101.

The memory card 200 is constituted by a nonvolatile memory and is configured to be detachably attached to a card slot 14 (see FIG. 1) arranged on the left side surface of the control section 1. The memory card 200 is capable of writing, storing and reading data such as image data and voice data according to an instruction from the CPU 101.

The external interface (I/F) 106 transmits/receives data to/from the cradle 30 detailed hereinbelow or an external equipment connected to the cradle 30 according to an instruction from the CPU 101. The data to be transmitted/received include image and voice data and control signals to the projector 10. The external interface (I/F) 106 also includes a power supply line.

The speaker 105 reproduces voice according to voice signals output from the CPU 101. The liquid crystal display 104 displays information such as texts according to an instruction from the CPU 101. The text information includes, for example, information indicating the operation state of the projector 10 and an operation menu.

The battery 108 includes a rechargeable secondary battery and supplies power to each section in the projector 10. The power supply circuit 107 includes a DC/DC conversion circuit, a charging circuit, a voltage detection circuit to convert the voltage of the battery 108 to a voltage required for each section in the projector 10. Further, the power supply circuit 107 charges the battery 108 with charge current supplied through the external interface (I/F) 106 when the voltage of the battery 108 is low and the remaining capacity is decreased. Further, the power supply circuit 107 is configured to use the supplied power in preference to the battery 108 when the power is supplied through the external interface (I/F).

The open and close angle detection switch 110 detects a rotation angle of the hinge section 3 and sends an OFF signal to the CPU 101 when the relative angle θ between the control section 1 and the projection section 2 is rendered 0 (zero) degrees (storage posture) while the switch 110 sends an ON signal when the relative angle θ is at an angle other than the above-mentioned angle.

The projection control circuit 124 controls each of the liquid crystal panel 122, the LED optical source 123, and the lens drive circuit 125. The projection control circuit 124 supplies predetermined current to the LED optical source 123 in response to an LED drive signal output from the CPU 101. The LED optical source 123 illuminates the liquid crystal panel 122 at a brightness corresponding to the supplied current.

The projection control circuit 124 creates a liquid crystal panel drive signal and drives the liquid crystal panel 122 with the created drive signal. In concrete terms, a voltage corresponding to the image signal is applied to a liquid crystal layer for each pixel. The liquid crystal layer to which the voltage is applied undergoes rearrangement of the orientation of liquid crystal molecules to change the transmittivity of light of the liquid crystal layer. In this manner, the liquid crystal panel 122 forms an optical image by modulating the light from the LED optical source 123 in accordance with to the image signal.

The lens drive circuit 125 moves the projection lens 121 back and forth in a direction perpendicular to an optical axis of the projection lens 121 based on the control signal output from the projection control circuit 124. The projection lens 121 projects the optical image projected from the liquid crystal panel 122 toward a screen or the like.

The posture sensor 130 detects the posture of the projection section 2 and sends the detection signal to the CPU 101 through the projection control circuit 124. This allows the CPU 101 to determine whether the projector 10 is in a storage posture state or in any one of the states shown in FIGs. 2(a) to 2(c).

### (Offset of projection image)

The CPU 101 changes the projection direction of the beam B by shifting the projection lens 121 in a direction perpendicular to the optical axis to offset the projection image. When the state shown in FIG. 2(a) has been determined, the CPU 101 controls the projector to project the beam B in a direction to come off from an extension plane of the surface 1a so that a portion of the beam B is not eclipsed by the mounting plane. That is, the projection lens 121 is shifted such that the upper end of the beam B is directed below the extension plane of the plane 1a in the state shown in FIG. 2(a). With this configuration, when the projector 10 is mounted with the surface 1a down, the lower end of the beam B is directed upward above an extension plane of the surface 1a, that is, the mounting plane.

Further, when the state shown in FIG. 2(c) has been determined, the CPU 101 controls the projector to project the beam B in a direction that comes off from an extension plane of the surface 1b so that a portion of the beam B will not be eclipsed by the mounting plane. That is, the projection lens 121 is shifted such that the lower end of the beam B is directed upward above the extension plane of the plane 1b.

Further, when the state shown in FIG. 2(b) has been determined, the CPU 101 controls the projection lens 121 to be shifted so that the lower end of the beam B is directed upward above an extension plane of the surface 1b. Also, when the state of storage posture (FIG. 1) has been determined, the CPU 101 controls the projection lens 121 to be shifted so that the lower end of the beam B is directed upward above the extension plane of the plane 1b.

In addition to the shifting of the projection lens 121, the offset of the projection image may be performed by shifting the liquid crystal panel 122 and the LED optical source 123 in the direction perpendicular to the optical axis. That is, the offset of the projection image can be realized by changing the relative position of the projection lens 121 and the liquid crystal panel 122 in the direction perpendicular to the optical axis.

### (Keystone compensation of projection image)

When a part of the projection lens 121, the liquid crystal panel 122, and the LED optical source 123 is shifted in the direction perpendicular to the optical axis, Keystone compensation is performed to the data to be projected depending on the shift amount. In case only the above-mentioned offset is given to projection image, the projection image is changed to have a trapezoidal geometry. Accordingly, the CPU 101 electrically performs Keystone compensation to the projection image by image processing in order to correct the trapezoidal geometry into rectangular geometry. The memory in the CPU 101 stores in advance initial correction values for correcting the projection image into a rectangular geometry in each of the states shown in FIGs. 2(a) to 2(c). Based on the initial values, the CPU 101 performs Keystone compensation on the data of the image to be projected on the memory 102. Note that Keystone compensation processing may be performed not only based on each of the states shown in FIGs 2(a) to 2(c) but also in correspondence to the angle θ.

### (Internal arrangement of control section)

The arrangement of chief pars the casing of the control section 1 is described with reference to FIGs. 1(a) to 1(c). The battery 108 is provided in the control section 1. The memory card 200 is attached to a card connector (not shown) mounted on a main circuit board (not shown). The main circuit board is further provided with a connector 106A that constitutes the external interface (I/F) 106. Note that in the front view of FIG. 1(c), illustration of the parts arranged in the projection section 2 is omitted and only the arrangement of the chief parts in the control section 1 is shown.

### (Internal arrangement of projection section)

The arrangement of the chief parts in the casing of the projection section 2 is described with reference to FIG. 1(b). In the projection section 2, there are arranged a projection optical system 12 including the projection lens 121, a substrate 122A having mounted thereon the liquid crystal panel 122, a condensing optical system 54, a substrate 123A having mounted thereon the LED optical source 123, and a heat dissipation member 53 that releases heat generated by the LED optical source 123 on the substrate 123A. The projection optical system 12 bends the beam having been transmitted through the liquid crystal panel 122 and advancing in the right direction in the projection section 2 downward and then projects it as the beam B.

The projection optical system 12 is configured so as to move back and forth in the direction of the optical axis (in the direction of right and left in FIG. 1(b)) in response to a rotation operation amount when the focus adjustment dial 13 is subjected to rotation operation. With the back and forth movement, the focus adjustment of the projection image is performed.

The heat dissipation member 53is made of a material with high thermal conductivity. The heat dissipation member 53 is configured to be integrated with the hinge section 3 in the projection section 2 to also enable heat to be conducted from the heat dissipation member 53 to the hinge section 3. The heat dissipation member 53 releases heat not only through radiation fins (not shown) formed on the surface thereof but also to the casing of the projection section 2. In concrete terms, a filling material 60 having high thermal conductivity is filled or a highly heat-conductive sheet is put in between the heat dissipation member 53 and the surface of the casing on the internal surface of the projection section 2 that faces the control section 1 in the storage posture.

### (Main processing of projector)

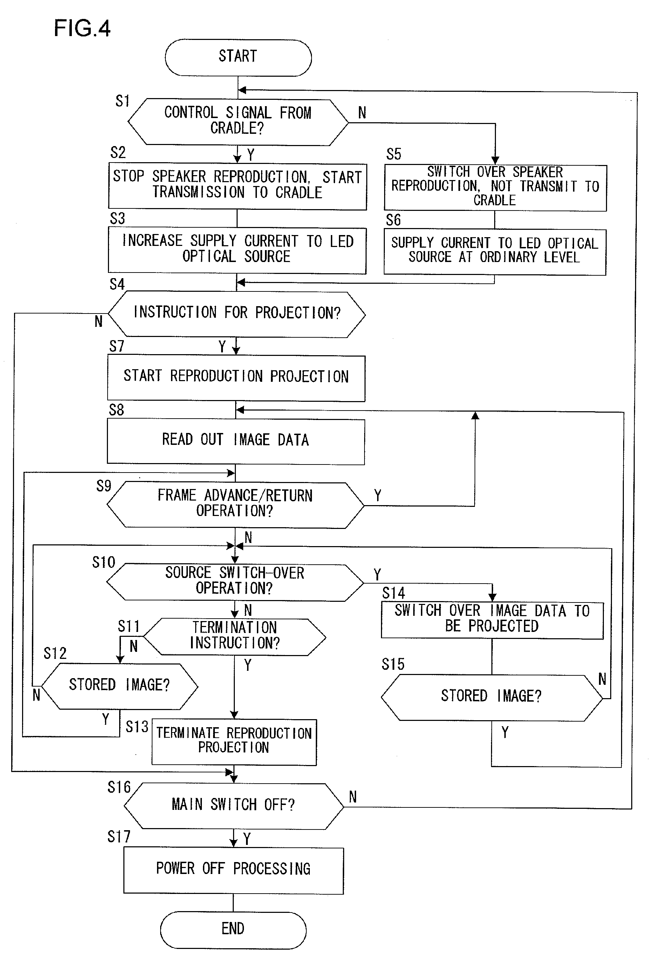

The flow of main processing performed by the CPU 101 of the above-mentioned projector 10 is described with reference to FIG. 4. The processing shown in FIG. 4 is started up when the main switch that constitutes the operation member 103 is turned ON. In a step S1 shown in FIG. 4, the CPU 101 determines whether or not a control signal is transmitted from the cradle 30. The CPU 101 determines that the result of the determination in the step S1 is YES, if the control signal is received by the external interface (I/F) 106 and the control flow proceeds to a step S2. On the other hand, the CPU 101 determines that the result of the determination in the step S1 is NO, if no control signal is received by the external interface (I/F) 106 and the control flow proceeds to a step S5.

When the control flow proceeds to the step S2, the CPU 101 deems that the projector 10 is mounted on a predetermined position on the cradle 30. In the step S2, the CPU 101 switches over the operation from reproduction of voice through the speaker 105 to reproduction of voice through the cradle 30 (stereo speaker) and the control flow proceeds to a step S3. In concrete terms, the CPU 101 switches the operation such that the transmission of voice signal to the speaker 105 is stopped and voice signal is transmitted to the cradle 30.

In the step S3, the CPU 101 sends an instruction to the projection control circuit 124 to increase the current supplied to the LED optical source 123 by a predetermined level of current from the ordinary level and the control flow proceeds to a step S4. This results in setting the luminance of the projection image by the projector 10 at a level higher than that in the ordinary case (i.e., projection luminance when the projector 10 is used singly).

In the case where the control flow proceeds to the step S5, the CPU 101 deems that the projector 10 is used singly. In the step S5, the CPU 101 switches the operation to the voice reproduction by the speaker 105 and the control flow proceeds to a step S6. In concrete terms, the destination of the voice signal is switched over from the cradle 30 to the speaker 105.

In the step S6, the CPU 101 sends an instruction to the projection control circuit 124 to set the current supplied to the LED optical source 123 at an ordinary level and the control flow proceeds to the step S4. This results in setting the luminance of the projection image by the projector 10 at the luminance in the ordinary time.

In the step S4, the CPU 101 determines whether or not projection has been instructed. When an ON operation signal is input from the optical source ON/OFF switch that constitutes the operation member 103 or when an ON instruction from the cradle 30 is input through the external interface (I/F) 106, the CPU 101 determines the result of the determination in the step S4 to be YES and the control flow proceeds to a step S7. On the other hand, when neither the ON operation signal nor the ON instruction is input, the CPU 101 determines that the result of the determination in the step S4 to be NO and the control flow proceeds to a step S16.

In the step S7, the CPU 101 sends an instruction to the projection control circuit 124 to start the projection of the reproduced image and the control flow proceeds to a step S8.

In the step S8, the CPU 101 reads out image data having the newest recording date from the memory card 200 and the read out image data are selected as image data for reproduction. The transmission of the image data for reproduction by the CPU 101 to the projection control circuit 124 causes reproduced image according to the image data for reproduction to be projected. Note that if voice data are stored in the data file of the image being projected, the CPU 101 causes voice according to the voice data to be reproduced. Also note that, the reproduction speaker is the one that has been switched to in the step S2 or S5.

In a step S9, the CPU 101 determines whether or not a frame advance/frame return operation is performed. When an operation signal instructing frame advance or frame return operation is input from the operation member 103, the CPU 101 determines the result of the determination in the step S9 to be YES and the control flow returns to the step S8 where the image data corresponding to the operation signal are read out from the memory card 200, and the read out image data is selected as image data for reproduction. On the other hand, when no operation signal instructing either frame advance or frame return is input from the operation member 103, the CPU 101 determines the result of the determination in the step S9 to be NO and the control flow proceeds to a step S10.

In the step S10, the CPU 101 determines whether or not a source switch-over operation has been performed. When an operation signal to instruct source switch-over is input from the operation member 103, the CPU 101 determines the result of the determination in the step S10 to be YES and the control flow proceeds to a step S14. On the other hand, when no operation signal instructing source switch-over is input, the CPU 101 determines the result of the determination in the step S10 to be NO and the control flow proceeds to a step S11.

In the step 511, the CPU 101 determines whether or not termination of projection has been instructed. When an OFF operation signal is input from the optical source ON/OFF switch that constitutes the operation member 103 or when an OFF instruction from the cradle 30 is input through the external interface (I/F) 106, the CPU 101 determines the result of the determination in the step S11 to be YES and the control flow proceeds to a step S13. On the other hand, when neither the OFF operation signal nor the OFF instruction is input, the CPU 101 determines that the result of the determination in the step S11 to be NO and the control flow proceeds to a step S12.

In the step S13, the CPU 101 sends an instruction to the projection control circuit 124 to terminate the projection of the reproduced image and the control flow proceeds to a step S16. In the step S12, the CPU 101 determines whether or not the image data for reproduction correspond to a stored image. When the image data for reproduction correspond to the stored image stored in the memory card 200, the CPU 101 determines the result of the determination in the step S12 to be YES and the control flow returns to the step S9. On the other hand, when the image data for reproduction correspond to the image input from the external interface (I/F) 106, the CPU 101 determines the result of the determination in the step S12 to be NO and the control flow returns to the step S10.

In the step S14, the CPU 101 switches over the image data for projection (image data for reproduction) and the control flow proceeds to a step S15. In concrete terms, the image data read out from the memory card 200 and the image data input from the external interface (I/F) 106 are switched over therebetween each time when a source switch-over operation is performed and the control flow proceeds to the step S15. Here, the term "source" refers to a source of the image data to be projected, such as the memory card 200 or the cradle 30 connected through the external interface (I/F) 106. The CPU 101, when it switches over the image data to one input from the external interface (I/F), causes a projection source request signal to be transmitted from the external interface (I/F) 106 to the cradle 30.

In the step S15, the CPU 101 determines whether or not the image data for reproduction after the switch-over are stored image. When the image data for reproduction are switched over to the stored image stored in the memory card 200, the CPU 101 determines the result of the determination in the step S15 to be YES and the control flow returns to the step S8 where the stored data are read out from the memory card 200, and the read out image data is selected as image data for reproduction. On the other hand, when the image data for reproduction are switched over to image data input from the external interface (I/F) 106, the CPU 101 determines the result of the determination in the step S15 to be NO and the control flow returns to the step S10. In this case, the determination on the frame advance/return operation is unnecessary.

In the step S16, the CPU 101 determines whether or not the main switch has been turned OFF. When the main switch that constitutes the operation member 103 is turned OFF, the CPU 101 determines the result of the determination in the step S16 to be YES and the control flow proceeds to a step S17 while when the main switch is not turned OFF, the CPU 101 determines the result of the determination in the step S16 to be NO and the control flow returns to the step S1. In the step S17, the CPU 101 performs predetermined power supply OFF processing to terminate the processing shown in FIG. 4.

### <Cradle>

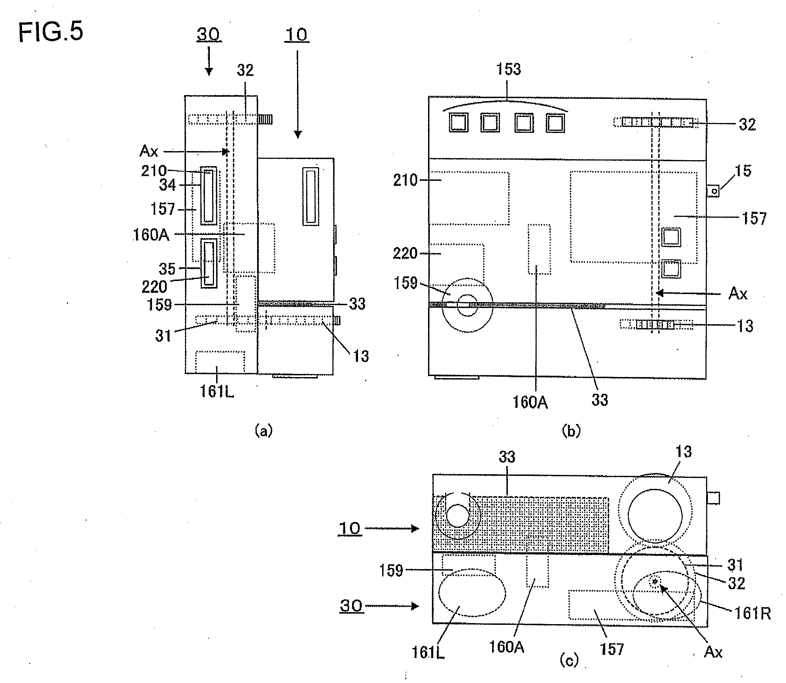

FIGs . 5(a) to 5(c) are three-plane diagrams that show the cradle 30 and the projector 10 in a state where the projector 10 is mounted on the cradle 30. FIG. 5(a) presents a left side view, FIG. 5(b) presents a plan view, and FIG. 5(c) presents a front view.

In FIG. 5(b), the cradle 30 is configured such that the area of the upper surface thereof is greater than the area of the upper surface of the projector 10. Therefore, when the projector 10 is mounted in a predetermined position on the cradle 30, a region of the upper surface of the cradle 30 is exposed. In this region, there are arranged an operation member 153 of the cradle 30 and a focus adjustment dial 32. The operation member 153 includes, for example, a main switch, an optical source ON/OFF switch, and a projection source switch-over switch and is configured to allow the cradle 30 to perform an operation on the projector 10.

As shown in FIG. 3, the cradle 30 includes a CPU 151, a memory 152, the operation member 153, a hard disk drive (HDD) 154, a power supply circuit 156, a detection switch 158, a fan 159, a projector interface (I/F) 160, a stereo speaker system 161, and an external interface (I/F) 155. A battery 157 and memory cards 210 and 220 are each attached to the cradle 30.

The CPU 151, which is a controller, performs, for example, predetermined calculation that uses signals input from each of the sections that constitute the cradle 30 based on a control program and sends a control signal to each section of the cradle 30. Note that the control program is stored in a nonvolatile memory (not shown) in the CPU 151.

The memory 152 is used as a working memory for the CPU 151. The operation member 153 sends an operation signal in accordance with each of the above-mentioned operation switches to the CPU 151.

The memory cards 210 and 220 are recording media of different types, each of which is constituted by a nonvolatile memory. The memory card 210 is configured to be detachably attached to a card slot 34 (see FIG. 5(a)) arranged at the left side surface of the cradle 30 while the memory card 220 is configured to be detachably attached to a card slot 35 (see FIG. 5(a)). The memory cards 210 and 220 can independently write, store and read out data such as image data/voice data according to respective instructions from the CPU 151.

The hard disk drive (HDD) 154 is a storage device having a relatively large volume as compared with, for example, a memory card. The hard disk drive (HDD) 154 is capable of writing, storing, and reading out data such as image/voice data according to instructions from the CPU 151. The hard disk drive (HDD) 154 is configured to be able to copy and store data of image projected by the projector 10 or store history information of the data of the image projected by the projector 10.

The external interface (I/F) 155 transmits/receives data to/from an external equipment such as a personal computer (PC) according to an instruction from the CPU 151. The data to be transmitted/received include image/voice data and control signals to the projector 10. The stereo speaker system 161 stereo-reproduces voice signal output from the CPU 151. The stereo speaker system 161 includes a left speaker 161L and a right speaker 161R as shown in FIG. 5(c). The stereo speaker system 161 includes an amplification circuit. The bore diameters of the speakers 161L and 161Rare adapted to be greater than the bore diameter of the speaker 105 of the projector 105 to enable higher quality reproduction.

The battery 157 includes a rechargeable secondary battery, which supplies power to each section in the cradle 30. The power supply circuit 156 includes a DC/DC conversion circuit, a charging circuit, a voltage detection circuit and converts the voltage of the battery 157 to a voltage required for each section in the cradle 30. Further, the power supply circuit 156 charges the battery 157 with current supplied through a commercial power source (not shown) when the voltage of the battery 157 is low and the remaining capacity is decreased.

The power supply circuit 156 is further configured to perform power supply to the projector 10 mounted on the cradle 30. The battery 157 is configured to have a capacity greater than that of the battery 108 of the projector 10, so that the cradle 30 and the projector 10 can be sufficiently driven with the power from the battery 157 even when the cradle 30 is not connected to the commercial power source.

The detection switch 158 is turned ON to send a detection signal to the CPU 151 as the projector 10 is mounted in a predetermined position on the cradle 30. When the projector 10 is not mounted in the predetermined position, the detection switch is turned OFF and no detection signal is sent to the CPU 157.

The projector interface (I/F) 160 transmits/receives data to/from the projector 10 according to an instruction from the CPU 151. The data to be transmitted/received include image/voice data and control signals to the projector 10. The projector interface (I/F) 160 also includes a power line.

### (Internal arrangement of cradle)

The arrangement of the chief parts in the casing of the cradle 30 is described with reference to FIGs. 5(a) to 5(c). The battery 157 is mounted substantially in the center of the casing. The memory card 210 is attached to a first card connector (not shown) mounted on a main circuit board (not shown). The memory card 220 is attached to a second card connector (not shown) mounted on the main circuit board. Both of the memory cards 210 and 220 may be mounted. Alternatively, either one of them may be mounted.

On the main circuit board, there are further provided a connector 160Athat constitutes the projector interface (I/F) 160 and a connector (not shown) that constitutes the external interface (I/F) 155. When the projector 10 is mounted in a predetermined position on the cradle 30, the connector 160A (convex connector) on the side of the cradle 30 and the connector 106A (concave connector) on the side of the projector 10 are fitted with each other. Note that in FIGs. 5(a) to 5(c), the construction arranged in the projector 10 is omitted and the arrangement of only the chief parts in the cradle 30 is illustrated.

The focus adjustment dial 32 is arranged in such a position that it is not hided below the projector 10 in its mounted state. A dial 31 is arranged just below the focus adjustment dial 13 of the projector 10 in its mounted state. As shown in FIGs. 5(a) to 5(c), the focus adjustment dial 32 and the dial 31 are connected through a common rotary axis Ax. The diameter of the focus adjustment dial 32 is greater than that of the dial 31. The dial 31 is constituted by a spur wheel provided with teeth (not shown) on the periphery thereof. On the other hand, the focus adjustment dial 13 of the projector 10 is also constituted by a spur wheel provided with teeth (not shown) on the periphery thereof. The dial 31 and the focus adjustment dial 13 are configured to have substantially the same diameter.

When the projector 10 is mounted in the predetermined position on the cradle 30, the dial 31 and the focus adjustment dial 13 engage (mesh) with each other. With this construction, when the focus adjustment dial 32 is rotated, the rotation movement is transferred to the focus adjustment dial 13 through the rotary axis Ax and the dial 31. As a result, the focus of projection image to be projected by the projector 10 is adjusted. Since the diameter of the focus adjustment dial 32 of the cradle 30 is greater than the diameter of the focus adjustment dial 13 of the projector 10, a quicker focus adjustment can be achieved by the rotation operation of the focus adjustment dial 32 than the rotation operation of the focus adjustment dial 13 of the projector 10.

On the upper surface of the cradle 30 is provided a heat dissipation member 33 that releases heat from the projector 10. The heat dissipation member 33 is in the form of fins and inserted in a space between the control section 1 and the projection section 2 of the projector 10 in a storage posture. Since the heat generated in the projection section 2 is conducted to the casing of the projection section 2 through the filling material 60 as mentioned above, the heat of the projection section 2 is further conducted to the casing of the cradle 30 through the heat dissipation member 33.

The cooling fan 159 is arranged below the hinge section 3 of the projector 10 in a mounted state and close to the upper surface of the casing of the cradle 30. The orientation of air blown by the fan 159 is set upward and the upper part of the casing of the cradle 30 is provided with a ventilation hole (not shown). Also, the casings of the control section 1 and the projection section 2 of the projector 10 are provided with ventilation holes (not shown) in positions corresponding to the fan 159. With this construction, the heat releasing effect of the projector 10 is increased by the fan 159 of the cradle 30

The hard disk drive (HDD) 154 is arranged, for example, on the lower part of the fan 159 in the casing of the cradle 30. The left and right stereo speakers 161L and 161R are arranged on the rear side of the front of the casing, respectively.

### (Main processing of cradle)

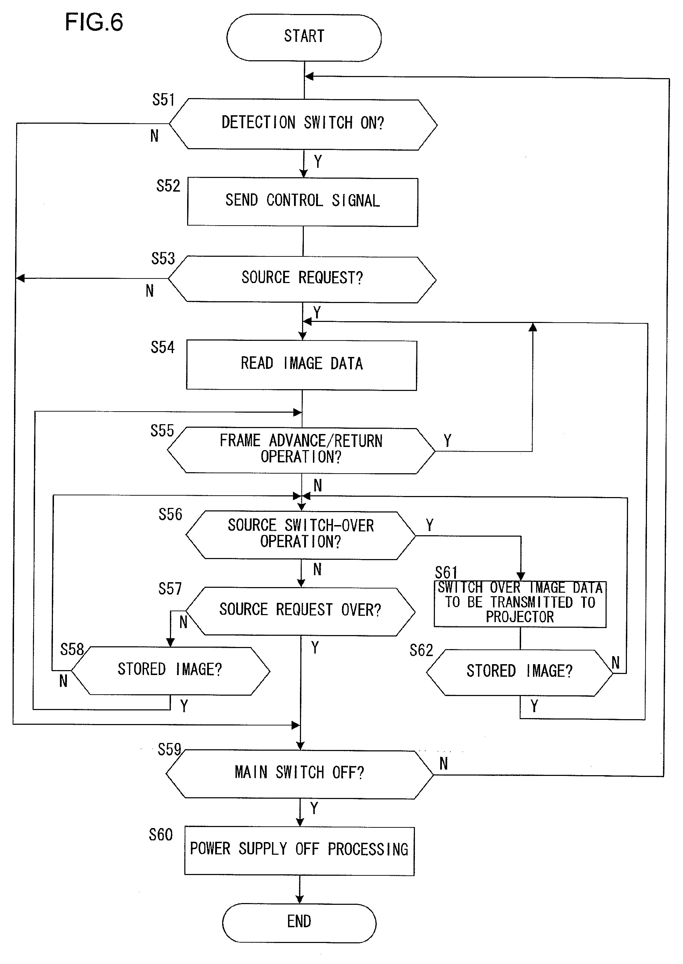

The flow of the above-mentioned main processing to be performed by the CPU 151 of the cradle is described with reference to the flowchart illustrated in FIG. 6. The processing shown in FIG. 6 is started up when the main switch that constitutes the operation member 153 is turned ON. In a step S51 in FIG. 6, the CPU 151 determines whether or not the detection switch 158 is turned ON. When a detection signal is input from the detection switch 158 (detection switch being turned ON), the CPU 151 determines the result of the determination in the step S51 to be YES and the control flow proceeds to a step S52. On the other hand, when no detection signal is input from the detection switch 158 (detection switch being OFF), the CPU 151 determines the result of the determination in the step S51 to be NO and the control flow proceeds to a step S59.

In the step S52, the CPU 151 controls the projector interface (I/F) 160 to transmit a control signal to the projector 10 and the control flow proceeds to a step S53 . In the step S53, the CPU 151 determines whether or not a projection source has been requested by the projector 10. When a projection source request signal is received by the projection interface (I/F) 160, the CPU 151 determines the result of the determination in the step S53 to be YES and the control flow proceeds to a step S54. On the other hand, when no projection source request signal is received by the projection interface (I/F) 160, the CPU 151 determines the result of the determination in the step S53 to be NO and the control flow proceeds to the step S59.

When the control flow proceeds to the step S59, the CPU 151 controls the stereo speaker system 161 to stereo-reproduce a voice according to the voice data received by the projection interface (I/F) 160. The voice signal is transmitted from the projector 10 when the projector 10 projects the reproduced image according to the image data stored in the memory card 200 attached to the projector 10 is projected by the projector 10.

In the step S54, the CPU 151 reads out image data having the newest recording date from the memory card 210 and the read out image data are selected as image data to be transmitted to the projector 10. The transmission of the image data to the projector 10 causes reproduced image according to the image data to be projected by the projector 10. Note that when voice data are stored in the data file of the image being projected, the CPU 101 controls the stereo speaker system 161 to stereo-reproduce a voice according to the voice data.

In a step S55, the CPU 101 determines whether or not a frame advance/frame return operation has been performed. When an operation signal instructing frame advance or frame return is input from the operation member 153, the CPU 151 determines the result of the determination in the step S55 to be YES and the control flow returns to the step S54. In this case, in the step S54, the image data corresponding to the operation signal are read out from the memory card 210, and the read out image data are selected as image data to be transmitted to the projector 10. On the other hand, when no operation signal instructing either frame advance or frame return is input from the operation member 153, the CPU 151 determines the result of the determination in the step S55 to be NO and the control flow proceeds to a step S56.

In the step S56, the CPU 151 determines whether or not a source switch-over operation has been performed. When an operation signal instructing source switch-over is input from the operation member 153, the CPU 151 determines the result of the determination in the step S56 to be YES and the control flow proceeds to a step S61. On the other hand, when no operation signal instructing source switch-over is input, the CPU 151 determines the result of the determination in the step S56 to be NO and the control flow proceeds to a step S57.

In the step S57, the CPU 151 determines whether or not the projection source request is terminated. When no signal requesting a projection source is input through the projector interface (I/F) 160, the CPU 151 determines the result of the determination in the step S57 to be YES and the control flow proceeds to the step S59. On the other hand, when the request for a projection source is continued, the CPU 151 determines the result of the determination in the step S57 to be NO and the control flow proceeds to a step S58.

In the step S58, the CPU 151 determines whether or not the image data being transmitted to the projector 10 correspond to a stored image. When the image data being transmitted correspond to a stored image stored in any of the memory card 210, the memory card 220, and the hard disk drive (HDD) 154, the CPU 151 determines the result of the determination in the step S58 to be YES and the control flow returns to the step S55. On the other hand, when the image data being transmitted to the projector 10 correspond to the image input from the external interface (I/F) 155, the CPU 151 determines the result of the determination in the step S58 to be NO and the control flow returns to the step S56.

In the step S61, the CPU 151 switches over the image data to be transmitted to the projector 10 and the control flow proceeds to a step S62. In concrete terms, for every source switch-over operation, the image data read out from the memory card 210, the image data read out from the memory card 220, the image data read out from the hard disk drive (HDD) 154, and the image data input from the external interface (I/F) 155 are sequentially switched over and the control flow proceeds to the step S62. Note that when no memory card is attached to the cradle 30, the reading out of the image data from the corresponding recording medium is skipped.

In the step S62, the CPU 151 determines whether or not the image data to be transmitted to the projector 10 correspond to a stored image. When the image data to be transmitted to the projector 10 correspond to a stored image stored in any of the memory card 210, the memory card 220, and the hard disk drive (HDD) 154, the CPU 151 determines the result of the determination in the step S62 to be YES and the control flow returns to the step S54. In this case, in the step S54, image data are read out from the corresponding recording medium and the read out image data are selected as image data to be transmitted to the projector 10. On the other hand, when the image data to be transmitted have been switched over to image data input from the external interface (I/F) 155, the CPU 151 determines the result of the determination in the step S62 to be NO and the control flow returns to the step S56. In this case, determination on the frame advance/return operation is unnecessary.

In the step S59, the CPU 151 determines whether or not the main switch has been turned OFF. When the main switch that constitutes the operation member 153 is turned OFF, the CPU 151 determines the result of the determination in the step S59 to be YES and the control flow proceeds to a step S60. On the other hand, when the main switch is not turned OFF, the CPU 151 determines the result of the determination in the step S59 to be NO and the control flow returns to the step S51. In the step S60, the CPU 151 performs predetermined power supply OFF processing to terminate the processing shown in FIG. 6.

According to the projection system of the embodiment detailed above, the following operational effects can be obtained.
(1) Since, when the projector 10 is mounted on the cradle 30, the projection luminance by the projector 10 is increased (step S3), with a projection image having high quality as compared when the projector 10 is used singly. On the other hand, at the ordinary time in which the projector 10 is used singly, the projection luminance is limited to a low level as compared with the case where the projector 10 is mounted on the cradle 30, so that the power consumption of the battery 108 in the projector 10 can be suppressed.

(2) Since, when the projector 10 is mounted on the cradle 30, a voice signal is transmitted from the projector 10 to the cradle 30 (step S2) to enable stereo reproduction from the cradle 30, a reproduced sound having high quality can be obtained in a high volume as compared with the ordinary time (reproduction by the speaker 105) in which the projector 10 is used singly.

(3) Since, when the projector 10 is mounted on the cradle 30, an operation on the projector 10 can be performed through the operation member 153 of the cradle 30, the projection system is user friendly. In addition, since the cradle 30 is provided with the large focus adjustment dial 32 to enable quick focus adjustment compared with the ordinary time in which the focus adjustment dial 13 is rotated in the projector 10, the operability by the user is improved.

(4) The memory cards 210 and 220 of the different types can be attached on the cradle 30 and when the projector 10 is mounted on the cradle 30, a reproduced image stored in the memory card 210 or 220 can be projected from the projector 10. With this construction, the number of card slots to be provided in the projector 10 can be limited to down-size the projector 10 and an image according to the image data stored in a memory card of a type from which it is usually impossible to read out an image with the function of the projector 10 (being different from the type of the card slot of the projector 10) can be projected by the projector 10.

(5) Since, when the projector 10 is mounted on the cradle 30, power is supplied from the cradle 30 to the projector 10 to enable the power source of the cradle 30 to be used preferentially to the battery 108 of the projector 10, the battery 108 can be set apart for later use. This enables use of an external power source that is usually impossible for the projector 10 to use, so that when the projector 10 is disconnected from the cradle 30, a prolonged use of the projection system becomes possible by means of the preserved battery 108.

(6) Since, when the projector 10 is mounted on the cradle 30, the heat generated in the projection section 2 of the projector 10 is conducted to the cradle 30 to allow the heat to be released also from the cradle 30, the heat release effect can be increased as compared with the case where the projector 10 is used singly.

In this manner, by mounting the projector 10 on the cradle 30 to allow use of the cradle 30 and the projector 10 in communication with each other, the projection function of the projector 10 can be expanded broader than the case where projection operation is performed by the projector 10 alone without communication with the cradle 30.

In the projection system detailed above, at least one of (1) to (6) above may be realized instead of realizing all of (1) to (6) above. In this case, the cradle 30 may be configured to include only the device corresponding to the function that can be executed. For example, when it is intended to provide a projection system lacking the function described in (2) above, the cradle 30 may be one in which no stereo speaker system 161 is arranged therein. Similarly, when it is intended to provide a projection system lacking the function described in (3) above, the cradle 30 may be one in which no operation member 153 is provided.

### (Variation Example 1)

In the above-mentioned embodiment, the projection luminance by the projector 10 is always increased when the projector 10 is mounted on the cradle 30. However, instead of this construction, the projector 10 may be configured to determine whether or not the projection luminance is to be increased depending on the remaining capacity of the battery 157 of the cradle 30. In this construction, the power supply circuit 156 of the cradle 30 supplies the power to the projector 10 when the voltage of the battery 157 is equal to or higher than a predetermined voltage while when the voltage of the battery 157 is below the predetermined voltage, the power supply circuit 156 stops the supply of power to the projector 10. The CPU 101 of the projector 10 controls the projection section 2 to increase the projection luminance when the power is supplied from the cradle 30 or not to increase the projection luminance when the power is not supplied from the cradle 30. This enables power consumption of the battery 157 in the cradle 30 to be suppressed.

### (Variation Example 2)

It may be configured such that a backup battery that is separate from the battery 157 can be mounted in the cradle 30. In this case, the CPU 151 transmits a signal indicating that there is provided a backup battery to the projector 10 from the projector interface (I/F) 160. The CPU 101 of the projector 10 controls the projection section 2 to increase the projection luminance when the CPU 101 receives the signal indicating that there is provided a backup battery or not to increase the luminance when the CPU 101 does not receive the signal indicating that there is provided a backup battery. With this, power consumption can be controlled depending on the condition of the power source on the side of the cradle 30.

In the above-mentioned embodiment, for the focus adjustment of the projector 10, the operation amount of the operation member (focus adjustment dial 32) on the side of the cradle 30 and the operation amount of the operation member (focus adjustment dial 13) on the side of the projector 10 are mechanically coupled. However, it may be configured such that both the operation amounts are electrically coupled by means of electrical signals.

While an example in which the auxiliary apparatus for a projection apparatus is constituted by the cradle 30 has been detailed above, the auxiliary apparatus may be configured as an extension apparatus to be added to the projector 10 instead of the cradle 30. Further, in the above-mentioned embodiment, the projector 10 is constituted by the control section 1 and the projection section 2, and the control section 1 and the projection section 2 are connected through the hinge section 3 so as to allow relative rotation movement. However, the construction of the projector 10 is not limited to this but the control section 1 and the projection section 2 may be configured such that they do not rotate relatively to each other. Also, while the projection system is configured such that the projector 10 is mounted on the upper surface of the cradle 30, the present invention is not limited to this construction but the projection system may be configured such that for example, the projector 10 may be attached to the side surface of the cradle 30.

What is described above is absolutely exemplary and the present invention should not be limited to the relationships between the components in the above mentioned embodiment and the constituent elements of the present invention upon interpretation of the present invention.
The present application corresponds to the following priority application and the disclosure thereof is herein incorporated by reference:
Japanese Patent Application No. 2005-233351 (filed August 11, 2005).

## Claims

1. An auxiliary apparatus for a projection apparatus used in association with a projection apparatus for projecting an optical image, comprising:
a communication device that performs communication with the projection apparatus; and
a projection auxiliary control device that, when communication is performed with the projection apparatus through the communication device, expands a projection function of the projection apparatus broader than when the optical image is projected without the communication.

2. An auxiliary apparatus for a projection apparatus according to claim 1, further comprising:
a voice reproducing device, wherein
the projection auxiliary control device controls the voice reproducing device to reproduce a voice signal acquired from the projection apparatus by the communication.

3. An auxiliary apparatus for a projection apparatus according to claim 1 or 2, further comprising:
a data reading out device, wherein
the projection auxiliary control device controls the data reading out device and the communication device to transmit image data read out from a recording medium in response to a request signal acquired from the projection apparatus by the communication to the projection apparatus.

4. An auxiliary apparatus for a projection apparatus according to any one of claims 1 to 3, further comprising:
an operation member, wherein
the projection auxiliary control device controls the communication device to transmit a focus adjustment instructing signal to the projection apparatus in response to an operation signal output from the operation member.

5. An auxiliary apparatus for a projection apparatus according to any one of claims 1 to 4, further comprising:
a power supply device, wherein
the projection auxiliary control device controls the power supply device to supply power to the projection apparatus.

6. An auxiliary apparatus for a projection apparatus according to any one of claims 1 to 5, wherein:
the projection auxiliary control device controls the communication device to transmit a control signal to increase projection luminance to the projection apparatus.

7. A projection system, comprising:
a projection apparatus; and
an auxiliary apparatus for the projection apparatus used in association with the projection apparatus, wherein:
the projection apparatus comprises a projection section that projects an optical image, a first communication device that performs communication with the auxiliary apparatus for the projection apparatus, and a projection control device that, when communication is performed with the auxiliary apparatus for the projection apparatus through the first communication device, expands a projection function of the projection section broader than when the optical image is projected without the communication, and
the auxiliary apparatus for the projection apparatus comprises a second communication device that performs communication with the projection apparatus, and a projection auxiliary control device that, when communication is performed with the projection apparatus through the second communication device, expands a projection function of the projection section broader than when the optical image is projected without the communication.

8. A projection system according to claim 7, wherein:
the projection control device controls the projection section to increase projection luminance in response to a control signal acquired from the auxiliary apparatus for the projection apparatus by the communication.

9. A projection system according to claim 7 or 8, wherein:
when a reproduction image according to image data acquired from the auxiliary apparatus for the projection apparatus is to be projected by the projection section, the projection control device controls the first communication device to transmit a request signal to the auxiliary apparatus for the projection apparatus, and controls the projection section to project a reproduction image according to the image data transmitted from the auxiliary apparatus for the projection apparatus in response to the request signal and received by the first communication device.

10. A projection system according to claim 7 or 8, wherein:
when communication is performed with the auxiliary apparatus for the projection apparatus, the projection control device controls the first communication device to transmit a voice signal to the auxiliary apparatus for the projection apparatus.

11. A projection assisting method for assisting a projection operation of a projection apparatus that projects an optical image by using an auxiliary apparatus for a projection apparatus in association with the projection apparatus, comprising:
performing communication between the projection apparatus and the auxiliary apparatus for the projection apparatus; and
expanding a projection function of the projection apparatus when the communication is performed between the projection apparatus and the auxiliary apparatus for the projection apparatus broader than when the optical image is projected without performing the communication.
